# EUROPEAN PATENT SPECIFICATION

(11) **EP 2 699 501 B1**
(45) Date of publication and mention of the grant of the patent: **27.05.2015**
(21) Application number: 12724718.7
(22) Date of filing: 20.04.2012
(51) Int. Cl.: B65G 59/02

(54) **MACHINE FOR MOVING OVERLAPPED LAYERS OF OBJECTS AND RELATIVE METHOD**
MASCHINE ZUM BEWEGEN ÜBERLAPPENDER SCHICHTEN VON OBJEKTEN UND ENTSPRECHENDES VERFAHREN
MACHINE PERMETTANT DE DÉPLACER DES COUCHES CHEVAUCHÉES D'OBJETS ET PROCÉDÉ RELATIF

(30) Priority: 22.04.2011 IT MI20110693
(43) Date of publication of application: 26.02.2014
(73) Proprietor: Emmeti S.P.A., 42027 Montecchio Emilia (IT)
(72) Inventor: SILVA, Valentina, I-42027 Montecchio Emilia (IT)
(74) Representative: Mozzi, Matteo
(86) International application number: PCT/IB2012/051991
(87) International publication number: WO 2012/143898

(56) References cited:
- EP-A1- 0 266 449
- EP-A1- 0 494 404
- EP-A1- 1 044 905
- DE-A1- 3 514 487

## Description

The present invention refers to a machine for moving overlapped layers of objects to be depalletized and to the relative moving method implemented with such a machine.

Layers of objects such as crates, cardboard boxes, pallets, bottles or containers made from glass, ceramic or plastic, cans, jars and so on, overlap one another so as to form a stack, arranged on a pallet, having a main developing direction that is vertical with respect to a reference plane, or rather the resting plane of the stack.

Machines are known for moving overlapped layers of objects, to be depalletized, forming a stack.

Such machines are equipped with robots, arms and mechanical frameworks that are suitable for picking up a layer on top of the stack and for transferring such a layer from the stack to a working plane, for example provided with a conveyor belt.

Machines of the known type are mainly of two kinds, called: top machines and bottom machines.

Top machines are called this since the single layer of objects picked up from the top of the stack is transferred to the working plane raised with respect to the resting plane (for example the pavement) on which there is the machine for moving. Such a height is at for example three metres above such a resting plane of the machine. The top machine is moreover equipped with one or more work stations arranged at the same height as the working plane so that the workers in charge can control the correct operation of the machine.

Such machines have the drawback of being very expensive since they necessarily use mechanisms that are rather complex and large in light of the removal height of the objects to be reached. A pertinent example of this is the mechanism which at each removal of a layer lifts the stack upwards so as to bring the following layer to the transfer height on the working plane.

Moreover, it should be noted that the raised work stations do not allow the workers themselves to suitably control and manage the entire machine in the most reliable and timely manner possible.

Bottom machines are called this due to the fact that the single layer of objects is transferred from the stack to a working plane which is at a level which can be accessed by a worker which moves on the resting plane of the machine (floor), or rather, at a height of around 100 centimetres from the resting plane of the machine.

With respect to a top machine, a bottom machine uses mechanisms such as to ensure that the manufacturing costs are lower. For example, the bottom machine is not configured to move the entire pallet each time upwards and does not foresee the arrangement of raised work stations. In addition, the fact that the workers work on the ground, makes it possible to control and manage the machine in a more reliable and complete manner with respect to a top machine.

However, the bottom machine has the drawback of being slower than top machines. Indeed, for the same type of objects, a top machine can move, from the stack to the working plane, an amount of layers of objects up to around double with respect to what can be moved with a bottom machine. This is due to the fact that the top machine carries out a single translation of the layer since the stack is raised each time so that the machine can always pick up the layer of objects which is on top of the stack. On the other hand, the bottom machine is configured so as to carry out, with the same mechanism, both the movement of the layer of objects from the top of the stack to the working plane and to be arranged each time at the top of the stack, which clearly lowers each time one layer of objects is picked up, so as to reach the following layer of objects to be picked up.

DE 3514 487 A1 discloses a machine according to the preamble of claim 1.

The purpose of the present invention is that of devising and providing a machine for moving overlapped layers of objects to be depalletized which makes it possible to at least partially avoid the drawbacks mentioned above with reference to the prior art and that in particular makes it possible to obtain a speed of moving overlapped layers of objects that is comparable to those of top machine keeping, in any case, the manufacturing costs of the machine, low.

Such a purpose is reached with a machine for moving overlapped layers of objects according to claim 1.

Preferred embodiments of such a machine are defined in the dependent claims 2 to 6.

Also a method for moving layers of objects to be depalletized according to claim 7 forms the object of the present invention.

Further characteristics and advantages of the machine for moving according to the invention shall become clearer from the following description of preferred embodiments, given as an indication and not for limiting purposes, with reference to the attached figures, in which:
- figure 1 illustrates a perspective view of a machine for moving according to one example of the invention;
- figure 2 illustrates a section view of an operative configuration of an element of the machine for moving of figure 1;
- figure 3 illustrates a top view of the element of figure 2;
- figure 4 illustrates a section view of a further operative configuration of the element of figure 2;
- figure 5 illustrates a section view of a further operative configuration of the element of figure 2;
- figure 6 illustrates a top view of the element of figure 5, and
- figures 7-11 illustrate perspective views of the machine for moving of figure 1 in different operative configurations during its operation.

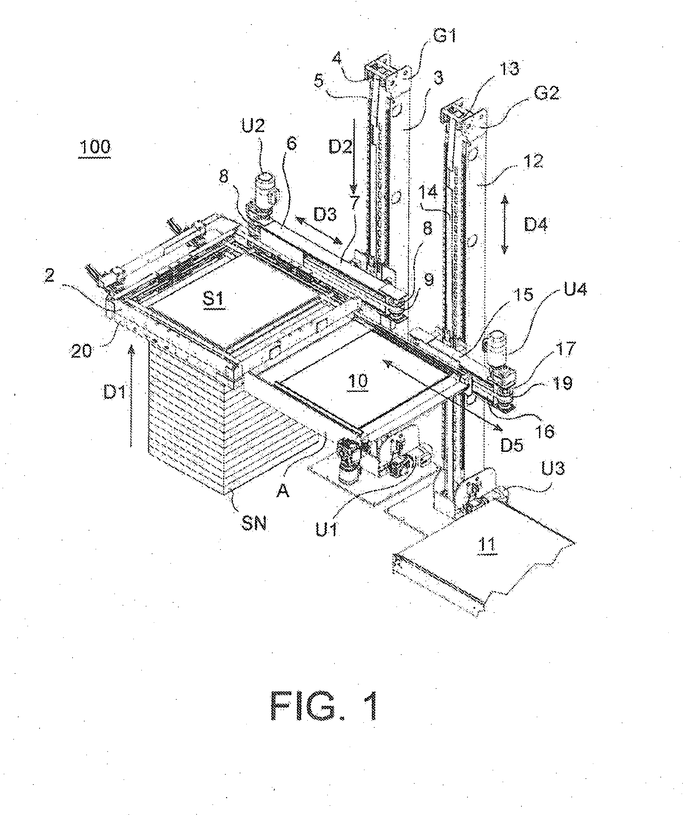

With reference to figure 1, it is now described a machine 100 for moving overlapped layers of objects S1-SN, in the rest of the description also machine for moving or simply machine, according to one example of the invention.

For the purposes of the present description, by objects they are meant crates, cardboard boxes, pallets, bottles, cans, jars, containers or in general containers made from glass, ceramic or plastic, and so on.

As shown in figure 1, the overlapped layers of objects S1-SN, with N being the maximum number of layers, form a stack 1 having a main developing direction D1.

For the purposes of the present description by main developing direction D1 of the stack 1 it is meant a direction perpendicular to a reference plane, such as a resting plane or pavement, on which the stack 1 and/or the machine for moving 100 is positioned.

Typically, such a stack 1 of overlapped layers of objects rests on a support (not shown in the figures) such as a platform or pallet, used in industry to move the stack with specific equipment (for example a forklift). Each layer preferably has a quadrangular shape.

According to the example of figure 1, the machine for moving 100 comprises means 2 for picking up at least one layer of objects S1 arranged on top of the stack 1.

Such picking up means 2 are configured for performing a first translation along a direction D2 parallel to the main developing direction D1 of the stack 1 to engage with said at least one layer of objects S1.

In greater detail, the machine for moving 100 comprises a first lifting group G1 operatively associated with such picking up means 2. Such a first lifting group G1, of the *per se* known type, is configured to make the picking up means 2 perform the first translation along the direction D2 parallel to the main developing direction D1 of the stack 1. Such a lifting group G1 comprises a support structure 3 having a main developing direction that is parallel to the main developing direction D1 of the stack 1. Such a support structure is equipped with two pulleys 4 (in the figure only one is visible) arranged at the two ends, opposite one another, of the support structure 3. On the two pulleys a movement belt 5 (or alternatively one or more chains) is engaged mechanically connected to the picking up means 2. The first lifting group G1 comprises one respective actuation unit U1 (for example, an electric motor) of the belt-pulleys mechanism so as to obtain the first translation of the picking up means 2 along the direction D2.

Such picking up means 2 are moreover configured for performing a second translation reversibly along a direction D3 that is orthogonal to the main developing direction D1 of the stack 1. As shall be described in the rest of the description, by reversible translation of the picking up means 2 it is meant a translation both in a first moving away direction of the picking up means 2 from the stack 1 and a second direction, opposite to the first, in which the picking up means 2 move closer to the stack 1.

In addition, the machine for moving 100 comprises means 6 for translating the picking up means 2 configured so as to make such picking up means 2 perform the second translation.

In greater detail, such translation means 6 are mechanically associated to the first lifting group G1. In other words, the picking up means 2 are mechanically connected to the first lifting group G1, in particular to the movement belt 5, through said translation means 6.

Such translation means 6 comprise a respective support structure 7 having main developing direction corresponding to the direction D3 orthogonal to the main developing direction D1 of the stack 1. The support structure 7 of the translation means 6 comprises two pulleys 8, each of which is arranged in one of the ends, opposite one another, of the support structure 7. On the two pulleys 8 a movement belt 9 is engaged mechanically connected to the picking up means 2. The means 6 for translating the picking up means 2 comprise a respective actuation unit U2 (for example, an electric motor) of the belt-pulleys mechanism so as to obtain the second translation of the picking up means 2 along the direction D3.

The machine for moving 100 also comprises a plane 10 for transferring said at least one layer of objects S1.

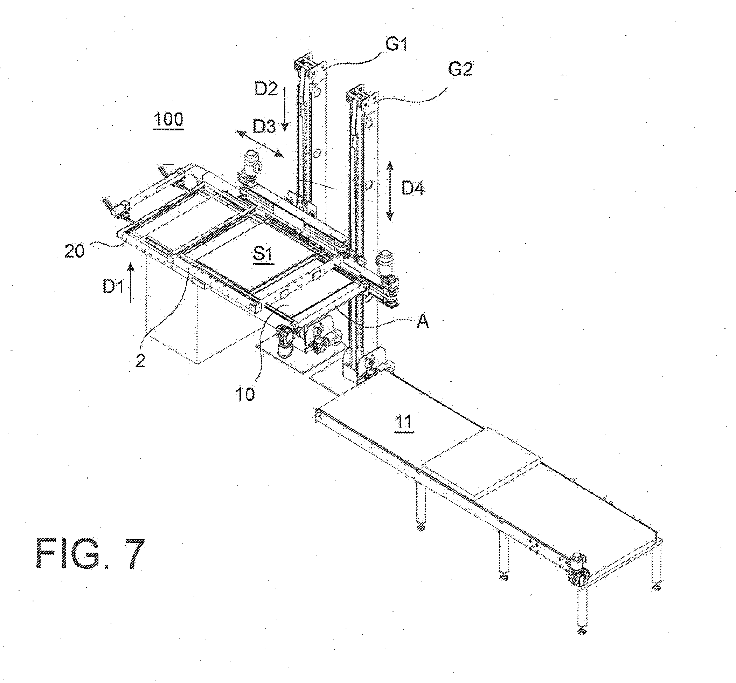

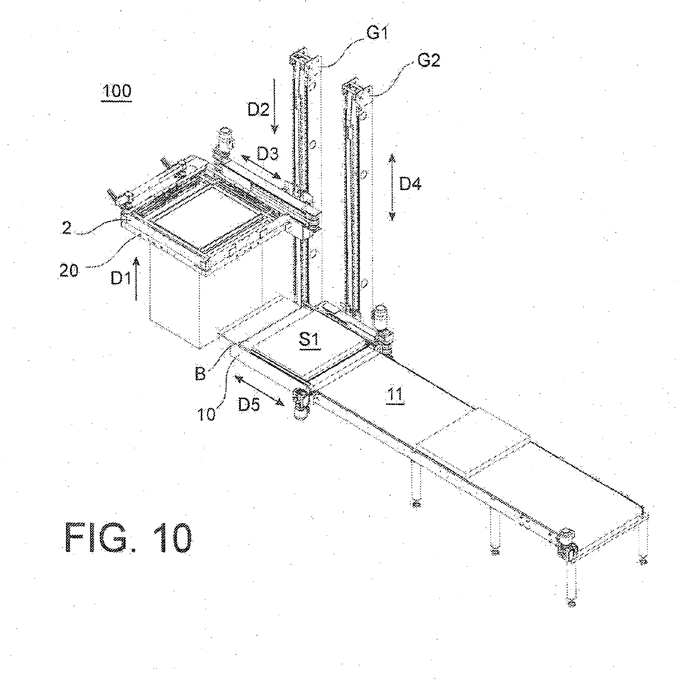

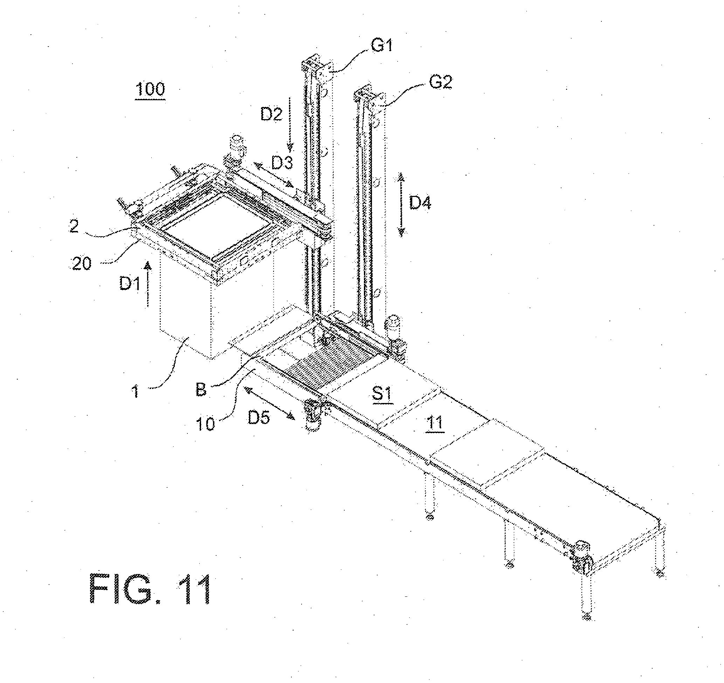

Such a transferring plane 10 is configured for performing a translation along a direction D4 parallel to the developing direction D1 of the stack 1 between a loading position A (also indicated in such a manner in figures 7-9, described in the rest of the description) of said at least one layer of objects S1 and an unloading position B (indicated in such a manner only in figures 10 and 11, also described in the rest of the description) of said at least one layer of objects towards a working plane 11 (only partially shown in figure 1).

For the purposes of the present description, by loading position A of said at least one layer of objects it is meant the position in which the transferring plane 10 is aligned with the base of the layer of objects in top of the stack 1. By unloading position B of said at least one layer of objects, it is meant on the other hand the position in which the transferring plane 10 is aligned with the working plane 11.

In such a loading position A, it should be noted that the picking up means 2 are configured for performing the second translation, described previously, to move said at least one layer of objects S1 on the transferring plane 10 along the direction D3.

In order to allow the translation of the transferring plane 10 along the direction D4 parallel to the main developing direction D1 of the stack 1, the machine for moving 100 also comprises a second lifting group G2 that is operatively associated with such a transferring plane 10. Such a suitably configured second lifting group G2 is completely analogous to the first lifting group G1 described previously.

Such a lifting group G2 comprises a support structure 12 having a main developing direction parallel to the main developing direction D1 of the stack 1. Such a support structure 12 is equipped with two pulleys 13 (in the figure only one is visible) arranged at the two ends, opposite one another, of the support structure 12. On the two pulleys 13 a movement belt 14, or alternatively one or more chains, is engaged, mechanically connected to the transferring plane 10. The second lifting group G2 comprises a respective actuation unit U3 (for example, an electric motor) of the belt-pulleys mechanism so as to obtain the translation of the transferring plane 10 along the direction D4.

Moreover, it should be noted that such a transferring plane 10 is configured for performing a further reversible translation along a direction D5 orthogonal to the main developing direction D1 of the stack 1. For the purposes of the present description, by reversible translation of the transferring plane 10 along the direction D5 orthogonal to the main developing direction D1 of the stack 1, it is meant a translation in a direction towards the stack 1 and the translation in an opposite direction towards the working plane 11.

It should be noted that the translation, described just now, of the transferring plane 10 towards the top of the stack 1 advantageously makes it possible to reduce the space between the top of the stack 1 and the transferring plane 10, when the latter is in the loading position A, so as to avoid damage or falling of said at least one layer of objects S1 or part of it during the second translation that the picking up means 2 perform to move said at least one layer of objects S1 from the top of the stack 1 to the transferring plane 10.

In a completely analogous manner, it should be noted that, on the other hand, the translation of the transferring plane 10 in the opposite direction towards the top of the stack 1 advantageously makes it possible to reduce the space between the transferring plane 10, when the latter is in the unloading position B, and the working plane 11 in order to avoid damage or falling of said at least one layer of objects S1 or part of it during the movement of said at least one layer of objects S1 from the transferring plane 10 to the working plane 11.

In greater detail, the machine for moving 100 comprises further means of translation 15 of the transferring plane 10 configured so as to make such a transferring plane 10 perform the further reversible translation along the direction D5 orthogonal to the main developing direction D1 of the stack 1.

In greater detail, such further translation means 15 are mechanically associated with the second lifting group G2. In other words, the transferring plane 10 is mechanically connected to the second lifting group G2, in particular to the movement belt 14, through said further translation means 15.

Such further translation means 15 comprise a respective support structure 16 having main developing direction corresponding to the direction D5 orthogonal to the main developing direction D1 of the stack 1. The support structure 16 of the further translation means 15 comprises two pulleys 17 (only one is visible in figure 1), each of which is arranged in one of the ends, opposite one another, of the support structure 16. On the two pulleys 17 a movement belt 18 is engaged mechanically connected to the transferring plane 10. The further translation means 15 of the transferring plane 10 comprise a respective actuation unit U4 (for example, an electric motor) of the belt-pulleys mechanism so as to obtain the reversible translation of the transferring plane 10 along the direction D5.

It should be noted that alternatively to using the moving unit U4 and the belt-pulleys mechanism, the translation of the transferring plane 10 along the direction D5 can be obtained in a pneumatic manner by using a cylinder and one or more sliding guides associated to the transferring plane 10.

Returning to the previously mentioned working plane 11, it is substantially parallel to the resting plane of the machine for moving 100 and preferably comprises an automated conveyor belt. Such a working plane 11 is arranged at such a height that one layer of objects in movement on the conveyor belt is accessible to a worker who is working standing on the resting plane of the machine for moving 100. One example of height of such a working plane 11 is of around 100 cm from the resting plane of the machine for moving.

It should be noted that advantageously, the picking up means 2 and the transferring plane 10 are configured to translate along the direction D2 and along the direction D4, respectively, both parallel to the main developing direction D1 of the stack 1, independent from one another. In greater detail, the picking up means 2 and the transferring plane 10 are configured so that whereas the transferring plane 10 performs the translation along the direction D4 parallel to the main developing direction D1 of the stack 1 from the loading position A to the unloading position B and *vice versa*, the transferring means 2 perform the translation along the direction D2 parallel to the main developing direction D1 of the stack 1 towards the following layer of objects arranged on the top of the stack 1. In such a way, it is advantageously possible to increase the speed at which the stack 1 is emptied since, at the moment in which the transferring plane 10 is taken back into the loading position A, the picking up means 2 are already engaged with the layer of following objects on top of the stack 1. In such a way, a bottom machine, such as the bottom machine of the example of figure 1, can reach, for the same type of product, a speed of emptying the stack that is greater with respect to the speed of emptying of a bottom machine of the prior art and comparable to the emptying speed of a top machine. For example, for particular types of objects, such as bottles made from glass, the machine of the example of figure 1 is capable of ensuring an emptying speed of the stack of around five layers and a half per minute whereas, for the same objects, the emptying speed ensured by the prior art can be of around three and a half layers for a bottom machine per minute and of around six layers per minute for a top machine.

Returning now to the picking up means 2, these comprise a quadrangular shaped framework that defines an opening so as to house inside it and embrace said at least one layer of objects S1. Moreover, such a framework is configured so as to lock the edge of said at least one layer of objects S1 and to allow the translation of said at least one layer of objects S1, by the picking up means 2, along the direction D3 orthogonal to the main developing direction D1 of the stack 1. In greater detail, such a framework, per se known, is provided with at least one pair of side boards that are suitable for locking at least one pair of edges, opposite one another, of said at least one layer of objects S1.

With reference again to figure 1, the machine for moving 100 also comprises centring means 20 configured to engage with a further layer of objects arranged below said at least one layer of objects S1 on top of the stack 1. Such centring means 20 are configured for performing, simultaneously with the picking up means 2, a translation along the direction D2 parallel to the main developing direction D1 of the stack 1 so that whereas the picking up means 2 embrace said at least one layer of objects S1 on top of the stack 1, the centring means 20 embrace said further layer of objects. In particular, such centring means 20 comprise a framework that is completely analogous to that described previously, i.e. quadrangular shaped and defining an opening so as to allow it to embrace the stack 1 and to lock the edge of such a further layer of objects (not visible in figure 1).

It should be noted that such centring means 20 are configured for exclusively performing the single translation along the direction parallel to the main developing direction D1 of the stack 1. In such a way, such centring means 20 are configured so as to keep stable the further layer of objects and therefore the upper part of the stack 1 near to the top whereas the picking up means 2 carry out the second translation of said at least one layer of objects S1 from the stack to the transferring plane 10. This makes it possible to advantageously prevent such a translation from modifying the alignment of the overlapped layers of objects near to the top of the stack 1 and in general of the stack itself or damaging the objects of the layer below that in movement.

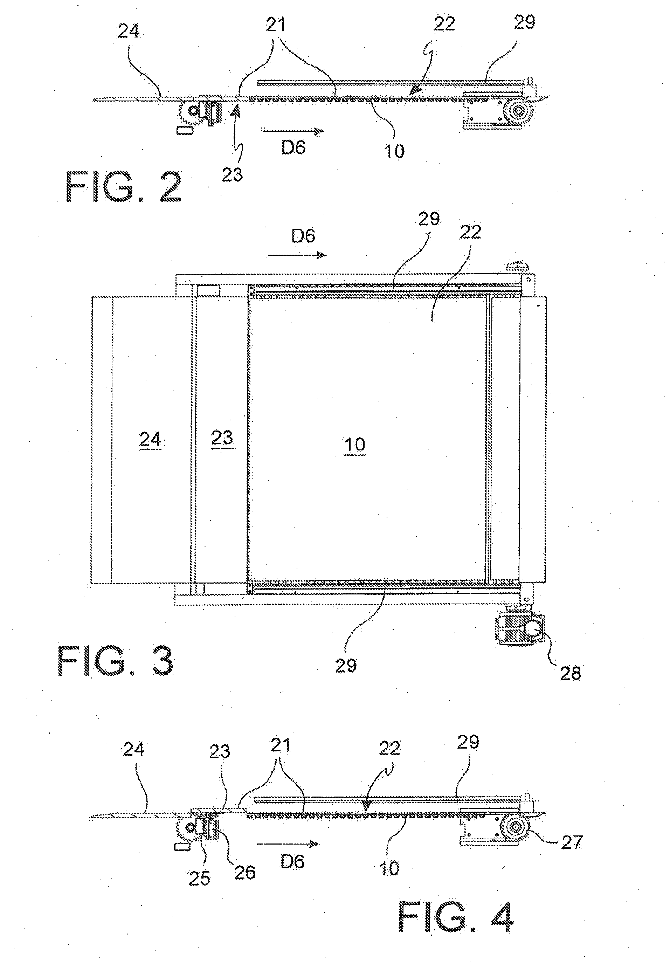

With reference to figures 2-6, it is now described in greater detail the transferring plane 10 of the example of the invention.

The transferring plane 10 comprises means for moving 21 said at least one layer of objects S1 from the transferring plane 10 to the working plane 11.

It should be noted that such moving means 21 are configured for performing a reversible translation along a moving direction D6 orthogonal to the main developing direction D1 of the stack 1. In particular, the translation is in a movement direction that is towards the working plane 11 to move said at least one layer of objects S1 from the transferring plane 10 to the working plane 11 and in another movement direction, opposite to the first, towards the stack 1 so as to bring the moving means 21 back in position such as to be able to move a subsequent layer of objects moved onto the reference plane 10.

In greater detail, the moving means 21 comprise a conveyor belt 22 configured to drag said at least one layer of objects, resting on it, towards the working plane 11.

Moreover, the moving means 21 comprise a pushing bar 23 operatively associated to the conveyor belt 22. In particular, such a pushing bar 23 is associated to an end of the conveyor belt 22 and arranged on the transferring plane 10 between the conveyor belt 23 and a free end 24 of the transferring plane 10 facing towards the stack 1 (figure 2).

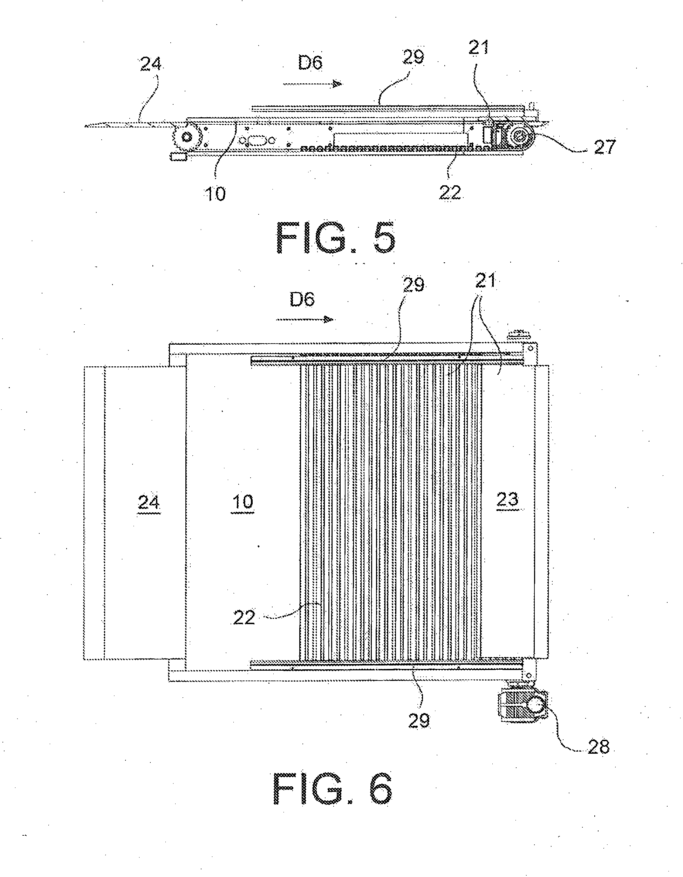

Such a pushing bar 23 is configured to perform a reversible translation along a direction orthogonal to the moving direction D6 between a retaining position and a releasing position. By retaining position it is meant a position of alignment of the pushing bar 23 with both the conveyor belt 22 and with the free end 24 of the transferring plane 10 so as to advantageously promote the movement of said at least one layer of objects S1 from the top of the stack 1 to the transferring plane 10 (figure 2). By releasing position it is meant a misalignment of the pushing bar 23 from the conveyor belt 22 so that when the moving means 21 (pushing bar 23 and conveyor belt 22) are actuated the pushing bar 23 goes into abutment with said at least one layer of objects S1 to push it towards the working plane 11 (figures 4 and 5). By reversible translation of the pushing bar it is meant the translation from the retaining position to the releasing position and *vice versa* along the same direction.

In order to perform the reversible translation of the pushing bar 23 along the direction orthogonal to the moving direction D6, the transferring plane 10 comprises a translation element 25, for example one or more sliding guides, mechanically associated to the pushing bar 23 and configured to make the pushing bar 23 perform the reversible translation between the retaining position and the releasing position. Such a translation element 25 is preferably controlled by a respective actuation unit 26 (for example, a pneumatic cylinder).

In order to perform the translation of the moving means 21 as defined previously, the transferring plane 10 comprises a pinion 27 that is suitable for engaging with and dragging such moving means 21 (in particular the conveyor belt 22). Such a pinion 27 is actuated by a respective actuation unit 28 (for example, an electric motor), visible in figures 3 and 6. Alternatively to the pinion 27, the transferring plane 10 can comprise a belt-pulleys mechanism.

Again with reference to figures 2-6, it should be noted that the transferring plane 10 comprises guides 29 having longitudinal development parallel to the moving direction D6. Such guides 29, for example two, are arranged on opposite sides of the transferring plane 10 and parallel to the moving direction D6. Such guides 29 perform the advantageous function of keeping said at least one layer of objects within a forced path on the transferring plane 10 avoiding it being damaging or even falling either during the translation from the top of the stack 1 or during the movement on the working plane 11.

Returning in general to the moving means 21 with which the transferring plane 10 of the described example is provided, it should be noted that such moving means 21 are integrated in the transferring plane 10. The fact that the machine for moving 100 has, inside the transferring plane 10, also the means to move the layers towards the working plane advantageously makes it possible to reduce the complexity of the machine for moving and therefore also the relative manufacturing costs.

Returning in general to the machine for moving 100 of the described example (figures 1-7), it also comprises a central processing unit (not shown in the figures), for example an electronic processor, operatively associated with the actuation units described and configured to load and run program codes to control the operation of the machine for moving 100 and in particular the different translations of the picking up means, of the transferring plane and of the moving means previously described.

With reference now to figures 1, 7-11, it is now described a method for moving overlapped layers of objects, according to one example of the invention.

It should be noted that in the aforementioned figures the same elements are indicated with the same reference numerals.

As mentioned previously, such overlapped layers of objects form a stack 1 having a main developing direction D1, previously defined.

Once the stack 1 of overlapped layers of objects S1-SN has been arranged by a worker (for example through a forklift) at the machine for moving 100 (figure 1), the method for moving comprises a step of providing means for picking up 2 at least one layer of objects S1 arranged on the top of the stack 1. Such picking up means 2 are configured for performing a first translation along a direction parallel D2 to the main developing direction D1 of the stack 1 to engage with said at least one layer of objects S1. Such picking up means 2 are moreover configured for performing a second reversible translation along a direction D3 (figure 1) orthogonal to the main developing direction D1 of the stack 1.

Such a method for moving also comprises a step of providing a plane for transferring 10 said at least one layer of objects S1. Such a transferring plane 10 is configured for performing a translation along a direction D4 parallel to the main developing direction D1 of the stack 1 between a loading position A of said at least one layer of objects S1 (figures 1, 7 and 8) and an unloading position B (figures 10-11) of said at least one layer of objects S1 towards a working plane 11 (figures 10 and 11).

Such a method comprises a step of picking up, through said picking up means 2, said at least one layer of objects S1 from the top of the stack 1.

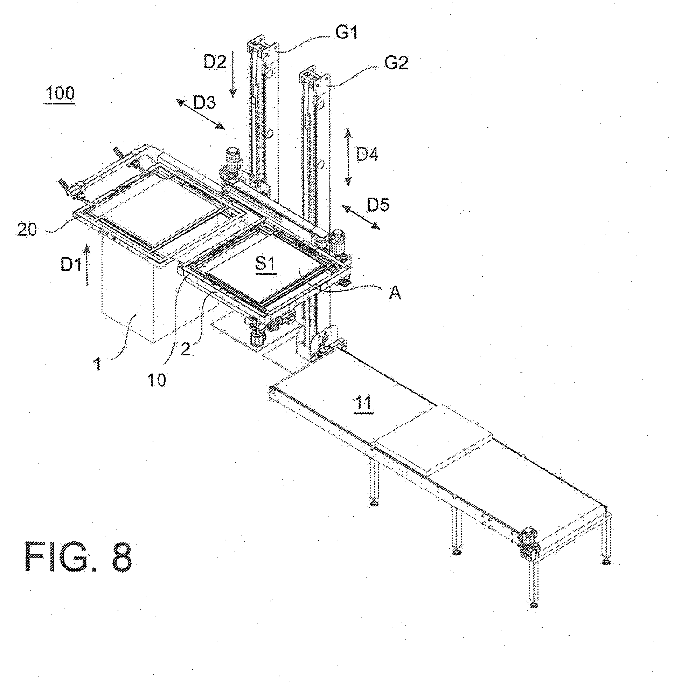

Subsequently, such a method also comprises a step of moving said at least one layer of objects S1 on the transferring plane 10 (figures 7 and 8).

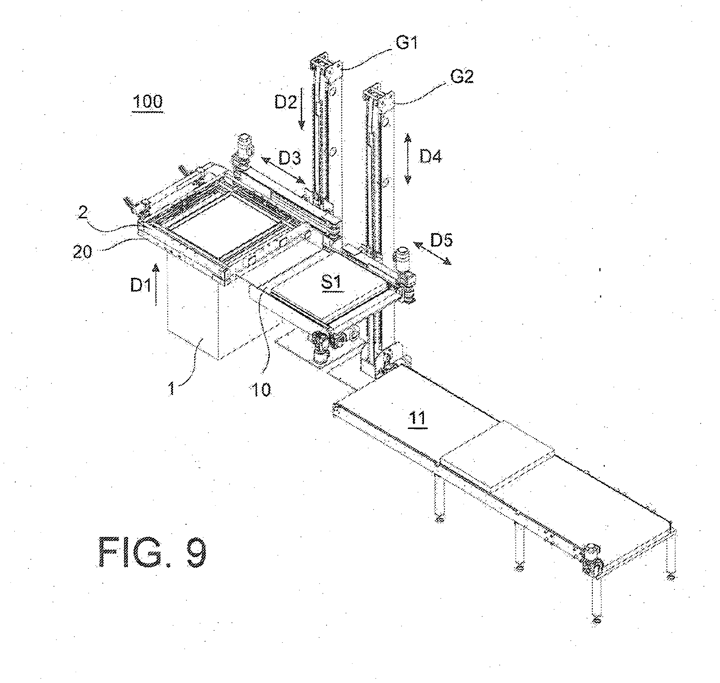

Subsequently, the method also comprises a step of translating said picking up means 2 along a direction D2 parallel to the main direction D1 of the stack 1 (figure 9) and a step of reversibly translating said transferring plane 10 along a parallel direction D4 of development D1 of the stack 1 from the loading position A to the unloading position B (figure 10). The step of translating said picking up means 2 and the step of reversibly translating said transferring plane 10 are performed independently from one another, as defined previously during the description of the machine for moving 100. This allows the picking up means 2 to be already engaged with a further layer of objects arranged on top of the stack 1 at the moment in which the transferring plane 10 reaches the loading position A.

The method also comprises a step of moving, through moving means 21 with which said transferring plane 10 is provided, said at least one layer of objects S1 from the transferring plane 10 to the working plane 11 (figure 11).

As can be seen the purpose of the invention id fully achieved since the proposed machine for moving, thanks to the independent translation of the picking up means from the transferring plane, makes it possible to eliminate waiting time of the transferring plane when this is in the loading position due to the fact that the picking up means have not yet been engaged with the following layer of objects to be moved. In the present invention, on the other hand, the picking up means are capable of moving independently from the transferring plane so as to engage with the layer of objects to be moved already while the transferring plane is translating to reach the loading position. At the moment in which the transferring plane reaches the loading position the machine for moving can begin to translate the layer of objects from the top of the stack to the transferring plane. This makes it possible, for the same type of layers of objects, to considerably increase the emptying speed of the stack by the machine for moving with respect to the emptying speed that can be obtained with a bottom machine of the prior art, even reaching performance that is comparable to that of a top machine.

Moreover, the fact that the transferring plane integrates the pushing means of the layer of objects from the transferring plane to the working plane allows the machine for moving to have low complexity and costs.

In addition, the fact that the machine for moving is a bottom machine makes it possible for a worker working on the working plane to be able to easily and timely control the machine for moving optimizing the number of workers in charge of using and of controlling such a machine.

To the embodiments of the machine for moving described above, a man skilled in the art, with the purpose of satisfying contingent needs, may carry out modifications, adaptations and replacements of elements with other functionally equivalent elements, without for this reason departing from the scope of the following claims.

## Claims

1. Machine (100) for moving overlapped layers of objects (S1-SN), said overlapped layers forming a stack (1) having a main developing direction (D1), comprising:
- means (2) for picking up at least one layer of objects (S1) arranged on the top of the stack (1), said picking up means (2) being configured to perform a first translation along a direction (D2) parallel to the main developing direction (D1) of the stack to engage with said at least one layer of objects (S1) and to perform a second translation reversibly along a direction (D3) orthogonal to the main developing direction of the stack (1),
- a plane (10) for transferring said at least one layer of objects (S1), said transferring plane (10) being configured to perform a reversible translation along a direction (D4) parallel to the main developing direction of the stack (1) between a loading position (A) of said at least one layer of objects (S1) and an unloading position (B) of said at least one layer of objects (S1) towards a working plane (11),
in said loading position (A) of the transferring plane (10), the picking up means (2) being configured to perform a second translation to move said at least one layer of objects (S1) on the transferring plane (10),
said picking up means (2) and said transferring plane (10) being configured to translate in a direction parallel to the main developing direction (D1) of the stack (1) independently from one another, said transferring plane (10) comprising means (21) for moving said at least one layer of objects (S1) from the transferring plane (10) to the working plane (11),
said moving means (21) being configured to perform a reversible translation along a moving direction (D6) orthogonal to the main developing direction (D1) of the stack (1),
said moving means (21) comprising a conveyor belt (22) configured to drag said at least one layer of objects (S1) towards the working plane (11),
said machine (100) being **characterised in that** said moving means (21) further comprise a pushing bar (23) operatively associated to the conveyor belt (22).

2. Machine (100) according to claim 1, wherein said pushing bar (23) is associated to an end of the conveyor belt (22) and arranged on the transferring plane (10) between the conveyor belt (22) and a free end (24) of the transferring plane (10) facing towards the stack (1).

3. Machine (100) according to any one of the previous claims, wherein said pushing bar (23) is configured to perform a translation along a direction orthogonal to the moving direction (D6) between a retaining position and a releasing position.

4. Machine (100) according to claim 3, wherein the transferring plane (10) comprises a translation element (25) mechanically associated to the pushing bar (23) and configured to make the pushing bar (23) perform a translation between the retaining position and the releasing position.

5. Machine (100) according to claim 1, further comprising centring means (20) configured to engage with a further layer of objects arranged below said at least one layer of objects (S1).

6. Machine (100) according to claim 5, wherein said centring means (20) are configured to perform, simultaneously with the picking up means (2), a translation along the direction (D2) parallel to the main developing direction (D1).

7. Method for moving overlapped layers of objects (S1-SN), said overlapped layers forming a stack (1) having a main developing direction (D1), comprising the steps of:
- providing means (2) for picking up at least a layer of objects (S1) arranged on the top of the stack (1), said picking up means (2) being configured to perform a first translation along a direction (D2) parallel to the main developing direction (D1) of the stack to engage with said at least one layer of objects (S1) and to perform a second translation reversibly along a direction (D3) orthogonal to the main developing direction (D1) of the stack (1);
- providing a plane (10) for transferring said at least one layer of objects (S1), said transferring plane (10) being configured to perform a reversible translation along a direction (D4) parallel to the main developing direction of the stack (1) between a loading position (A) of said at least one layer of objects (S1) and an unloading position (B) of said at least one layer of objects (S1) towards a working plane (11);
- picking up, through said picking up means (2), said at least one layer of objects (S1) from the top of the stack (1);
- moving said at least one layer of objects (S1) on the transferring plane (10);
- translating said picking up means (2) along a direction (D2) parallel to the main developing direction (D1) of the stack (1) and reversibly translating said transferring plan (10) along a direction (D2) parallel to the main developing direction (D1) of the stack (1), the step of translating said picking up means (2) and the step of reversibly translating the transferring plane (10) being carried out independently from one another;
- moving, through moving means (21), which the transferring plane (10) is provided with, said at least one layer of objects (S1) from the transferring plane (10) to the working plane (11), said moving means (21) being configured to perform a reversible translation along a moving direction (D6) orthogonal to the main developing direction (D1) of the stack (1);
- providing a conveyor belt (22) configured to drag said at least one layer of objects (S1) towards the working plane (11), said moving means (21) comprising said conveyor belt (22);
- providing a pushing bar (23) operatively associated to the conveyor belt (22), said moving means (21) comprising said pushing bar (23).

## Patentansprüche

1. Maschine (100) zum Bewegen überlappender Schichten von Objekten (S1-SN), wobei die überlappenden Schichten einen Stapel (1) bilden, welcher eine Hauptentwicklungsrichtung (D1) aufweist, umfassend:
- Mittel (2) zum Aufnehmen wenigstens einer Schicht von Objekten (S1), welche an der Oberseite des Stapels (1) angeordnet ist, wobei die Aufnahmemittel (2) dazu eingerichtet sind, eine erste Verlagerung entlang einer Richtung (D2), welche parallel zu der Hauptentwicklungsrichtung (D1) des Stapels ist, durchzuführen, um mit der wenigstens einen Schicht von Objekten (S1) in Eingriff zu treten und eine zweite Verlagerung entlang einer Richtung (D3), welche orthogonal zu der Hauptentwicklungsrichtung des Stapels (1) ist, reversibel durchzuführen,
- eine Ebene (10) zum Übertragen der wenigstens einen Schicht von Objekten (S1), wobei die Übertragungsebene (10) dazu eingerichtet ist, eine reversible Verlagerung entlang einer Richtung (D4), welche parallel zu der Hauptentwicklungsrichtung des Stapels (1) ist, zwischen einer Beladeposition (A) der wenigstens einen Schicht von Objekten (S1) und einer Entladeposition (B) der wenigstens einen Schicht von Objekten (S1) in Richtung einer Arbeitsebene (11) durchzuführen,
wobei die Aufnahmemittel (2), in der Beladeposition (A) der Übertragungsebene (10), dazu eingerichtet sind, eine zweite Verlagerung durchzuführen, um die wenigstens eine Schicht von Objekten (S1) auf der Übertragungsebene (10) zu bewegen,
wobei die Aufnahmemittel (2) und die Übertragungsebene (10) dazu eingerichtet sind, sich in einer Richtung, welche parallel zu der Hauptentwicklungsrichtung (D1) des Stapels (1) ist, unabhängig voneinander zu verlagern, wobei die Übertragungsebene (10) Mittel (21) zum Bewegen der wenigstens einen Schicht von Objekten (S1) von der Übertragungsebene (10) zu der Arbeitsebene (11) umfasst, wobei die Bewegungsmittel (21) dazu eingerichtet sind, eine reversible Verlagerung entlang einer Bewegungsrichtung (D6), welche orthogonal zu der Hauptentwicklungsrichtung (D1) des Stapels (1) ist, durchzuführen,
wobei die Bewegungsmittel (21) ein Förderband (22) umfassen, welches dazu eingerichtet ist, die wenigstens eine Schicht von Objekten (S1) in Richtung der Arbeitsebene (11) zu ziehen,
wobei die Maschine (100) **dadurch gekennzeichnet ist, dass** die Bewegungsmittel (21) ferner einen Schubstab (23) umfassen, welcher dem Förderband (22) betriebsmäßig zugeordnet ist.

2. Maschine (100) nach Anspruch 1, wobei der Schubstab (23) einem Ende des Förderbands (22) zugeordnet ist und an der Übertragungsebene (10) zwischen dem Förderband (22) und einem freien Ende (24) der Übertragungsebene (10), welches in Richtung des Stapels (1) gerichtet ist, angeordnet ist.

3. Maschine (100) nach einem der vorhergehenden Ansprüche, wobei der Schubstab (23) dazu eingerichtet ist, eine Verlagerung entlang einer Richtung, welche orthogonal zu der Bewegungsrichtung (D6) ist, zwischen einer Rückhalteposition und einer Freigabeposition durchzuführen.

4. Maschine (100) nach Anspruch 3, wobei die Übertragungsebene (10) ein Übertragungselement (25) umfasst, welches dem Schubstab (23) mechanisch zugeordnet ist und dazu eingerichtet ist, den Schubstab (23) zu veranlassen, eine Verlagerung zwischen der Rückhalteposition und der Freigabeposition durchzuführen.

5. Maschine (100) nach Anspruch 1, ferner umfassend Zentriermittel (20), welche dazu eingerichtet sind, mit einer weiteren Schicht von Objekten, welche unter der wenigstens einen Schicht von Objekten (S1) angeordnet ist, in Eingriff zu treten.

6. Maschine (100) nach Anspruch 5, wobei die Zentriermittel (20) dazu eingerichtet sind, eine Verlagerung entlang der Richtung (D2), welche parallel zu der Hauptentwicklungsrichtung (D1) ist, gleichzeitig mit den Aufnahmemitteln (2) durchzuführen.

7. Verfahren zum Bewegen überlappender Schichten von Objekten (S1-SN), wobei die überlappenden Schichten einen Stapel (1) bilden, welcher eine Hauptentwicklungsrichtung (D1) aufweist, umfassend die Schritte:
- eines Bereitstellens von Mitteln (2) zum Aufnehmen wenigstens einer Schicht von Objekten (S1), welche auf der Oberseite des Stapels (1) angeordnet ist, wobei die Aufnahmemittel (2) dazu eingerichtet sind, eine erste Verlagerung entlang einer Richtung (D2), welche parallel zu der Hauptentwicklungsrichtung (D1) des Stapels ist, durchzuführen, um mit der wenigstens einen Schicht von Objekten (S1) in Eingriff zu treten und eine zweite Verlagerung entlang einer Richtung (D3), welche orthogonal zu der Hauptentwicklungsrichtung (D1) des Stapels (1) ist, reversibel durchzuführen;
- eines Bereitstellens einer Ebene (10) zum Übertragen der wenigstens einen Schicht von Objekten (S1), wobei die Übertragungsebene (10) dazu eingerichtet ist, eine reversible Verlagerung entlang einer Richtung (D4), welche parallel zu der Hauptentwicklungsrichtung des Stapels (1) ist, zwischen einer Beladeposition (A) der wenigstens einen Schicht von Objekten (S1) und einer Entladeposition (B) der wenigstens einen Schicht von Objekten (S1) in Richtung einer Arbeitsebene (11) durchzuführen;
- eines Aufnehmens der wenigstens einen Schicht von Objekten (S1) von der Oberseite des Stapels (1) durch die Aufnahmemittel (2);
- eines Bewegens der wenigstens einen Schicht von Objekten (S1) auf der Übertragungsebene (10);
- eines Verlagerns der Aufnahmemittel (2) entlang einer Richtung (D2), welche parallel zu der Hauptentwicklungsrichtung (D1) des Stapels (1) ist, und eines reversiblen Verlagerns der Übertragungsebene (10) entlang einer Richtung (D2), welche parallel zu der Hauptentwicklungsrichtung (D1) des Stapels (1) ist, wobei der Schritt des Verlagerns der Aufnahmemittel (2) und der Schritt des reversiblen Verlagerns der Übertragungsebene (10) voneinander unabhängig ausgeführt werden;
- eines Bewegens der wenigstens einen Schicht von Objekten (S1) von der Übertragungsebene (10) zu der Arbeitsebene (11) durch Bewegungsmittel (21), mit welchen die Übertragungsebene (10) versehen ist, wobei die Bewegungsmittel (21) dazu eingerichtet sind, eine reversible Verlagerung entlang einer Bewegungsrichtung (D6), welche orthogonal zu der Hauptentwicklungsrichtung (D1) des Stapels (1) ist, durchzuführen;
- eines Bereitstellens eines Förderbands (22), welches dazu eingerichtet ist, die wenigstens eine Schicht von Objekten (S1) in Richtung der Arbeitsebene (11) zu ziehen, wobei die Bewegungsmittel (21) das Förderband (22) umfassen;
- eines Bereitstellens eines Schubstabs (23), welcher dem Förderband (22) betriebsmäßig zugeordnet ist, wobei die Bewegungsmittel (21) den Schubstab (23) umfassen.

## Revendications

1. Machine (100) destinée à déplacer des couches superposées d'objets (S1-SN), lesdites couches superposées formant une pile (1) possédant une direction de développement principale (D1), comprenant :
- des moyens (2) pour prélever au moins une couche d'objets (S1) située sur le haut de la pile (1), lesdits moyens de prélèvement (2) étant configurés pour effectuer une première translation selon une direction (D2) parallèle à la direction de développement principale (D1) de la pile pour entrer en contact avec ladite au moins une couche d'objets (S1) et pour réaliser une deuxième translation de manière réversible selon une direction (D3) perpendiculaire à la direction de développement principale de la pile (1),
- un plan (10) pour le transfert de ladite au moins une couche d'objets (S1), ledit plan de transfert (10) étant configuré pour réaliser une translation réversible selon une direction (D4) parallèle à la direction de développement principale de la pile (1) entre une position de chargement (A) de ladite au moins une couche d'objets (S1) et une position de déchargement (B) de ladite au moins une couche d'objets (S1) vers un plan de travail (11),
dans ladite position de chargement (A) du plan de transfert (10), les moyens de prélèvement (2) étant configurés pour réaliser une deuxième translation pour déplacer ladite au moins une couche d'objets (S1) sur le plan de transfert (10),
lesdits moyens de prélèvement (2) et ledit plan de transfert (10) étant configurés pour effectuer une translation dans une direction parallèle à la direction de développement principale (D1) de la pile (1) indépendamment les uns des autres, ledit plan de transfert (10) comprenant des moyens (21) pour déplacer ladite au moins une couche d'objets (S1) du plan de transfert (10) vers le plan de travail (11),
lesdits moyens de déplacement (21) étant configurés pour réaliser une translation réversible selon une direction de déplacement (D6) perpendiculaire à la direction de développement principale (D1) de la pile (1),
lesdits moyens de déplacement (21) comprenant une courroie transporteuse (22) configurée pour tirer ladite au moins une couche d'objets (S1) vers le plan de travail (11),
ladite machine (100) étant **caractérisée par le fait que** lesdits moyens de déplacement (21) comprennent en outre une barre de poussée (23) fonctionnant solidairement avec la courroie transporteuse (22).

2. Machine (100) selon la revendication 1, dans laquelle ladite barre de poussée (23) est associée à une extrémité de la courroie transporteuse (22) et disposée sur le plan de transfert (10) entre la courroie transporteuse (22) et une extrémité libre (24) du plan de transfert (10) orienté vers la pile (1).

3. Machine (100) selon une des revendications précédentes, dans laquelle ladite barre de poussée (23) est configurée pour réaliser une translation selon une direction perpendiculaire à la direction de déplacement (D6) entre une position de retenue et une position de relâchement.

4. Machine (100) selon la revendication 3, dans laquelle le plan de transfert (10) comprend un élément de translation (25) associé mécaniquement à la barre de poussée (23) et configuré pour obliger la barre de poussée (23) à effectuer une translation entre la position de retenue et la position de relâchement.

5. Machine (100) selon la revendication 1, comprenant en outre des dispositifs de centrage (20) configurés pour entrer en contact avec une autre couche d'objets située sous ladite au moins une couche d'objets (S1).

6. Machine (100) selon la revendication 5, dans laquelle lesdits dispositifs de centrage (20) sont configurés pour réaliser, simultanément avec les moyens de prélèvement (2), une translation selon la direction (D2) parallèle à la direction de développement principale (D1).

7. Méthode destinée à déplacer des couches superposées d'objets (S1-SN), lesdites couches superposées formant une pile (1) possédant une direction de développement principale (D1), comprenant les étapes de :
- fourniture des moyens (2) pour prélever au moins une couche d'objets (S1) située sur le haut de la pile (1), lesdits moyens de prélèvement (2) étant configurés pour effectuer une première translation selon une direction (D2) parallèle à la direction de développement principale (D1) de la pile pour entrer en contact avec ladite au moins une couche d'objets (S1) et pour réaliser une deuxième translation de manière réversible selon une direction (D3) perpendiculaire à la direction de développement principale (D1) de la pile (1) ;
- fourniture d'un plan (10) pour le transfert de ladite au moins une couche d'objets (S1), ledit plan de transfert (10) étant configuré pour réaliser une translation réversible selon une direction (D4) parallèle à la direction de développement principale de la pile (1) entre une position de chargement (A) de ladite au moins une couche d'objets (S1) et une position de déchargement (B) de ladite au moins une couche d'objets (S1) vers un plan de travail (11) ;
- prélèvement, par lesdits moyens de prélèvement (2), de ladite au moins une couche d'objets (S1) au sommet de la pile (1) ;
- déplacement d'au moins une couche d'objets (S1) sur le plan de transfert (10) ;
- translation desdits moyens de prélèvement (2) selon une direction (D2) parallèle à la direction de développement principale (D1) de la pile (1) et translation réversible dudit plan de transfert (10) selon une direction (D2) parallèle à la direction de développement principale (D1) de la pile (1), l'étape de translation desdits moyens de prélèvement (2) et l'étape de translation réversible du plan de transfert (10) étant réalisées indépendamment l'une de l'autre ;
- déplacement, par des moyens de déplacement (21) dont est équipé le plan de transfert (10), de ladite au moins une couche d'objets (S1) entre le plan de transfert (10) et le plan de travail (11), lesdits moyens de déplacement (21) étant configurés pour réaliser une translation réversible selon une direction de déplacement (D6) perpendiculaire à la direction de développement principale (D1) de la pile (1) ;
- fourniture d'une courroie transporteuse (22) configurée pour tirer ladite au moins une couche d'objets (S1) vers le plan de travail (11), lesdits moyens de déplacement (21) comprenant ladite courroie transporteuse (22) ;
- fourniture d'une barre de poussée (23) fonctionnant solidairement avec la courroie transporteuse (22), lesdits moyens de déplacement (21) comprenant ladite barre de poussée (23).
